(19) Europäisches Patentamt
European Patent Office
Office européen des brevets

(11) Veröffentlichungsnummer : **0 343 154 B1**

(12) # EUROPÄISCHE PATENTSCHRIFT

(45) Veröffentlichungstag der Patentschrift :
**05.08.92 Patentblatt 92/32**

(51) Int. Cl.⁵ : $A62D\ 3/00$, $B09B\ 3/00$

(21) Anmeldenummer : **89890155.8**

(22) Anmeldetag : **22.05.89**

(54) Verwendung von mineralischen, silicatischen/carbonatischen Feinteilen zur geordneten Ablagerung von Abfallstoffen.

(30) Priorität : **20.05.88 AT 1341/88**

(43) Veröffentlichungstag der Anmeldung :
**23.11.89 Patentblatt 89/47**

(45) Bekanntmachung des Hinweises auf die
Patenterteilung :
**05.08.92 Patentblatt 92/32**

(84) Benannte Vertragsstaaten :
**BE CH DE ES FR GB GR IT LI LU NL SE**

(56) Entgegenhaltungen :
**EP-A- 0 050 371**
**DE-A- 2 838 873**
**DE-B- 2 638 224**
**US-A- 4 668 128**

(73) Patentinhaber : **Riehl-Herwirsch, Georg, Dr.**
**Hauptstrasse 70**
**A-2801 Katzelsdorf (AT)**

(72) Erfinder : **Riehl-Herwirsch, Georg, Dr.**
**Hauptstrasse 70**
**A-2801 Katzelsdorf (AT)**

(74) Vertreter : **Piso, Eberhard, Dr.**
**Patentanwälte Barger, Piso & Partner**
**Postfach 333**
**A-1011 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von mineralischen Feinteilen zur Beimengung zu abzulagernden Abfallstoffen, wobei die Abfallstoffe mit den mineralischen Feinteilen versetzt werden, die die Abfallstoffe umhüllen bzw. durchsetzen und eine Matrix bilden, und die so mit den mineralischen Feinteilen versetzten Abfallstoffe auf einen Ablagerungsort ausgebracht und mechanisch verfestigt werden.

Eine solche Verwendung ist bereits aus der DE-A-2 838 873 bekannt.

Diese Entgegenhaltung betrifft ein Verfahren zur Behandlung von Müll, wobei dieser mit Kalk versetzt, auf eine Bodenfläche ausgebreitet und verdichtet wird.

Das Wesen dieses Verfahrens besteht darin, den Kalk vor allem dem Müll als Desinfektionsmittel zuzusetzen, um einerseits Fäulnisprozesse und dadurch die Entstehung überriechender Gase sowie eine oft damit einhergehende Kontaminierung des Grundwassers und anderseits eine unerwünschte Vermehrung von Krankheitskeime verbreitenden Tieren zu unterbinden bzw. zu verringern. Durch das Verpressen des mit ungelöschtem oder gelöschtem Kalk versetzten Mülls soll auch ein Durchdringen von Wasser und damit eine Verschmutzung des Grund- und Oberflächenwassers verringert werden.

Tatsächlich kann aber ein Durchsatz von Wasser durch den verdichteten, mit Kalk versetzten Müll nicht wirklich unterbunden werden; einerseits bildet der Kalk keine richtig dichtende Matrix und anderseits ist, Kalk doch, zu einem gewissen Grad durch Wasser, insbesondere auch unterstützt, von der Zusammensetzung des Mülls, lösbar.

Zum schadlosen Deponieren von Abfallstoffen wurden zahlreiche weitere Verfahren vorgeschlagen, die alle insgesamt darauf abzielen, die Abfallstoffe schließlich so zu deponieren, daß sie die Umwelt, bzw. vor allem das Grundwasser nicht bzw. möglichst wenig durch Schadstoffe belasten. Dies geschieht in vielen Fällen dadurch, daß die festen oder in wässerigen Medien gelösten Abfallstoffe mit chemisch reagierenden Stoffen meist unter Zusatz von Wasser versetzt werden.

So ist es aus der DE-AS 2 652 107 bekannt, feinteilige, Metallverbindungen enthaltende Rückstände u.a. mit gebranntem Kalk zu versetzen und in ein festes granulatartiges Produkt überzuführen. Aus der DE-AS 2 638 224 ist es bekannt,chlor- oder schwefelhaltige Produktionsrückstände mit trockenen, pulverförmigen und saugfähigen Stoffen, wie beispielsweise Kalk, Kalkstein, Dolomit oder Zement zu versetzen und nach Zusatz von Wasser gleichfalls in feste, granulatartige Produkte überzuführen.

Aus der EU-Patentanmeldung 50 371 ist ein Verfahren zum schadlosen Deponieren von festen oder in wässerigen Medien gelösten Abfallstoffen bekannt, wobei die Abfallstoffe gegebenenfalls unter Zusatz von Wasser mit Braunkohlenasche als alkalisch reagierendem Stoff behandelt und homogen gemacht werden, worauf die Massen gegebenenfalls nach mechanischer Verdichtung unter Wärmeentwicklung chemisch erhärten gelassen werden.

In der EP-A1-208 871 ist weiters ein Verfahren zur Herstellung auslaugfester Agglomerate geoffenbart, wobei feinteilige Abfallstoffe mit einer kolloidalen, wässerigen Lösung eines hydraulischen Bindemittels in einem Zwangsmischer bzw. Mischgranulator umhüllt und als Agglomerate, Pellets oder Granalien aushärten gelassen werden.

Die DE-A1-33 47 376 beschreibt ein Verfahren zur Deponierung von Kohlekraftwerk-Reststoffen durch Vermischen derartiger Reststoffe mit Reststoffen einer Entschwefelungsanlage unter Zusatz von Calciumhydroxid als Bindemittel und Verdichtung des erhaltenen Produkts. Um ein deponierbares Produkt dabei zu erlangen, ist eine ganz spezielle Abstimmung der Reststoffe einerseits und der Bindemittel anderseits aufeinander sowie eine sehr spezifische Verfahrensführung erforderlich.

Die DE-A1-36 02 562 offenbart ein Verfahren zur Herstellung von festen Agglomeraten aus mineralischen Schlämmen mit organischen Bestandteilen, wobei der Schlamm unter Erhitzen und gleichzeitiger Verbrennung der organischen Bestandteile pelletiert und dann die Grünpellets nach und nach in einem Pellet-Bett geklinkert werden.

Allen vorbeschriebenen Verfahren haften aber Nachteile an. So ist einmal zur Herstellung von festen, lagerbaren Endprodukten Voraussetzung, daß überhaupt nur chemisch miteinander reagierende und in bestimmten Mengenverhältnissen vorliegende Stoffe einsetzbar sind. Ein weiterer Nachteil besteht darin, daß insbesonders die so hergestellten granulierten Produkte infolge ihrer großen Oberfläche und Porosität nicht so sehr dem Angriff des Wassers widerstehen können, als daß ein Auswaschen von Schadstoffen hieraus wirklich unterbunden wäre. Nachteilig ist schließlich, daß die Teilchengröße der Abfallstoffe relativ gleichförmig sein muß und ein bestimmtes Höchstmaß nicht überschreiten darf, damit überhaupt eine Ablagerung der festen Endprodukte ohne allzu große Schadstoffbelastung des Grundwassers möglich ist. Weitere Nachteile der oben geschilderten bekannten Verfahren liegen auch einerseits in der bisweilen aufwendigen und sehr spezifischen Verfahrensführung und anderseits in den hohen zur Durchführung dieser Verfahren erforderlichen Energieaufwänden.

Aufgabe der Erfindung ist es, unter Vermeidung der zuvor geschilderten Nachteile, Abfallstoffe, wie beispielsweise Müll, Hausmüll, aber auch Sondermüll, sowie Abfallstoffe aus Altlasten mit Zusatzstoffen zu versetzen, die einerseits billig zur Verfügung stehen, anderseits mit den Abfallstoffen im wesentlichen keine oder eine höchstens lokal begrenzte chemische Reaktion eingehen und schließlich als Ganzes solche feste Massen bilden können, die nach ihrer Deponierung keinerlei Gefahren für Umwelt oder Grundwasser durch Auswaschen oder Entweichen von Schadstoffen nach sich ziehen.

Die Erfindung schlägt daher zur Lösung dieser Aufgabe eine Verwendung der eingangs genannten Art vor, die die Kennzeichnenden Merkmale des unabhängigen Anspruchs aufweist.

Der große Vorteil des erfindungsgemäßen Einsatzes von mineralischen, silicatischen/carbonatischen Feinteilen zur geordneten Ablagerung von Abfallstoffen besteht nun darin, daß solche die Abfallstoffe vollständig umhüllenden bzw. durchsetzenden Feinteile bei der Kompaktierung einen gesteinsartigen Körper bilden, wobei die gleichen diagenetischen Verfestigungsvorgänge auftreten wie bei der Wiederverfestigung von Sedimenten an oder nahe der Erdoberfläche, d.h. unter den an der Erdoberfläche wirkenden Temperatur-Druckbedingungen. Dadurch sind die Abfallstoffe vollständig inertisiert und dem Angriff von Wässern entzogen, sodaß keine Auswaschung von Schadstoffen mehr erfolgen kann. Ein weiterer Vorteil besteht darin, daß die Größe von Abfallstoffteilen oder -teilchen unkritisch ist. Bei einer solchen Art der Ablagerung von Abfallstoffen, insbesondere von Müll oder Hausmüll, tritt keine Geruchsbelästigung der Umgebung auf. Es finden auch keine oder nur untergeordnete Gärprozesse statt, da die Abfallstoffteile oder -teilchen unter Luftabschluß vollständig in den mineralischen, silicatischen/carbonatischen Feinteilen eingebettet sind. Hinsichtlich der Auswahl möglicher Standorte ergeben sich auch weitaus günstigere Voraussetzungen, da nur diejenigen vorab auszuscheiden sind, die stärkeren Erosionseinflüssen ausgesetzt und/oder direkt oder indirekt von Massenbewegungen betroffen sind.

Nach einem bevorzugten Merkmal der Erfindung sind die mineralischen Feinteile natürlichen Ursprungs oder Rückstände aus Produktionsprozessen. Die erfindungsgemäß einsetzbaren mineralischen Feinteile können auch tonmineralreiche Rückstände aus der Kieswäsche, Reststoffe aus vorsortierten Abfallstoffen, Entstaubungsrückstände oder feinteilige Stoffe aus Bauschutt sein.

Die mineralischen, silicatischen/carbonatischen Feinteile bestehen im überwiegenden Maße aus einem silicatischen Anteil - einem Ton- und Schluffanteil.

Die Korndurchmesser der erfindungsgemäß einsetzbaren mineralischen, silicatischen/carbonatischen Feinteile liegen im Bereich zwischen 0 und 0,02 mm; zur vollständigen Einbettung der Abfallstoffe muß eine ausreichende Menge an Feinstfraktionen (Rohtonfraktionen $\leq 0,002$ mm) vorhanden sein; zur Stabilität der Ablagerung können je nach Erfordernis größere Kornfraktionen (Sand, Kiesfraktionen) zugesetzt werden.

Das Mengenverhältnis zwischen Abfallstoffen und mineralischen, silicatischen/carbonatischen Feinteilen bei den mit den Feinteilen versetzten, zur endgültigen Ablagerung gelangenden Abfallstoffen wird vor allem bestimmt von Art und Größe der Abfallstoffe und liegt im Regelfall zwischen 60 und 85 zu 40 bis 15%, vorzugsweise zwischen 80 zu 20%.

Der erfindungsgemäße Einsatz von mineralischen, silicatischen/carbonatischen Feinteilen zur geordneten Ablagerung von festen und/oder pastösen Abfallstoffen wird an Hand der Ablagerung von Müll bzw. Hausmüll näher beschrieben und kann wie folgt erfolgen:

Der mit üblichen Müllabfuhrfahrzeugen eingesammelte Müll bzw. Hausmüll wird zu einer am Ablagerungsplatz gelegenen Behandlungsstrecke gebracht und dort abgeladen. Vorzugsweise unter Ausnutzung der Schwerkraft rutscht der Müll über ein Gefälle in ein Becken, in welches vorher Schlämmrückstände aus der Kieswäsche (Schluff) eingebracht wurden. Hierin erfolgt eine vollständige Umhüllung des Mülls bzw. der Müllteile oder -teilchen mit Schluffmaterial, das durch vorherige oder gleichzeitige mit Mülleintragung erfolgenden Wasserzugabe eine breiige Masse bildet. Der mit Schluff durch und durch versetzte Müll wird sodann mittels eines Förderers auf den Ablagerungsort ausgebracht, dort ausgebreitet und eingeebnet und schließlich mechanisch kompaktiert. Hier erfolgt der erste Schritt eines diagenese-ähnlichen Verfestigungsprozesses. Der Schluff bildet eine dichte Matrix, sodaß dadurch ein der weiteren diagenetischen Verfestigung unterworfener gesteinsartiger Körper entsteht, dessen physikalisch-chemisches Verhalten gegenüber der Einwirkung von Atmosphärilien und Wasser durchaus demjenigen von natürlichen Gesteinskörpern vergleichbar ist. Dadurch bedarf eine solche Ablagerung keiner weiteren speziellen Behandlung oder Nachsorge. Der natürlichen Erosion wirken die diagenetischen Verfestigungsvorgänge entgegen, sodaß ein Auswaschen oder Entweichen von Schadstoffen aus dem gesteinsähnlich verfestigten Müllkörper nicht oder zumindest nicht in einem die Umgebung tatsächlich gefährdenden Ausmaß zu befürchten ist. Wesentlich beim Anlegen bzw. Aufbau der Ablagerungen ist lediglich, daß die einzelnen mit Schluff versetzten Müllmengen nicht in zu mächtigen Lagen ausgebracht werden, sodaß die Kompaktierung jeweils auch immer vollständig stattfindet.

**Patentansprüche**

1. Verwendung von mineralischen Feinteilen zur Beimengung zu abzulagernden Abfallstoffen, wobei die Abfallstoffe mit den mineralischen Feinteilen versetzt werden, die die Abfallstoffe umhüllen bzw. durchsetzen und eine Matrix bilden, und die so mit den mineralischen Feinteilen versetzten Abfallstoffe auf einen Ablagerungsort ausgebracht und mechanisch verfestigt werden, dadurch gekennzeichnet daß zur geordneten Ablagerung der festen und/oder pastösen Abfallstoffe die mineralischen Feinteile silicatische/carbonatische Feinteile mit überwiegendem silicatischem Ton- und Schluffanteil mit einer Korngröße zwischen 0 und 0,02 mm und mit einer zur vollständigen Einbettung der Abfallstoffe ausreichenden Menge an Feinstkornfraktionen (Rohtonfraktionen ≦ 0.002 mm) sind, wobei das Mengenverhältnis zwischen Abfallstoffen und mineralischen Feinteilen zwischen 60 und 80 zu 40 bis 15%, vorzugsweise zwischen 80 und 20% ist und daß die mit den mineralischen Feinteilen versetzten und zur Ablagerung ausgebrachten Abfallstoffe zu einem dichten gesteinsartigen Körper kompaktiert werden, der dann der diagenetischen Verfestigung überlassen wird.

2. Verwendung von mineralischen Feinteilen nach Anspruch 1 dadurch gekennzeichnet, daß die mineralischen Feinteile tonmineralreiche Rückstände aus der Kieswäsche, Reststoffe aus vorsortierten Abfallstoffen oder Entstaubungsrückstände sind.

3. Verwendung von mineralischen Feinteilen nach Anspruch 1 oder 2 dadurch gekennzeichnet, daß zur Stabilität der Ablagerung größere Kornfraktionen (Sand, Kiesfraktion) zugesetzt werden.

**Claims**

1. Use of fine mineral particles for mixing with waste materials to be stored, wherein the waste materials are treated with the fine mineral particles which envelope or permeate the waste materials and form a matrix and the waste materials so treated with the fine mineral particles are brought to a storage location and mechanically compacted, characterised in that for the ordered deposition of the solid and/or pasty waste materials the fine mineral particles are silicate/carbonate fine particles with a preponderant silicate clay and silt proportion having a particle size between 0 and 0.2 mm and with a sufficient quantity of the finest grain fractions (crude clay fractions < 0.002 mm) for the complete embedding of the waste materials, wherein the mixing ratio between waste materials and fine mineral particles is between 60 and 80 to 40 to 15%, preferably between 80 and 20%, and that the waste materials treated with the fine mineral particles and brought for storage are compacted to a dense stony body which then allows the diagenetic strengthening.

2. Use of fine mineral particles in accordance with Claim 1, characterised in that the fine mineral particles are clay mineral rich residues from gravel washing, residues from pre-sorted waste materials or dust extraction residues.

3. Use of fine mineral particles in accordance with Claim 1 or 2, characterised in that for the stability of the store, larger grain fractions (sand, gravel fractions) are added.

**Revendications**

1. Utilisation de fractions fines minérales en vue de leur addition à des déchets à déposer, les déchets étant mélangés aux fractions fines minérales qui enrobent les déchets ou qui les imprègnent, respectivement, en formant une matrice, et les déchets ainsi mélangés aux fractions fines minérales étant déchargés sur un lieu de dépôt et compactés mécaniquement, caractérisée par le fait qu'en vue d'un dépôt contrôlé des déchets solides et/ou pâteux, les fractions fines minérales sont des fractions fines silicatées et carbonatées avec une proportion prépondérante d'argile et de limon silicaté dont la dimension des grains est comprise entre 0 et 0,02 mm, et avec une quantité de fractions à grains très fins (fractions d'argile brute ≦ 0,002 mm) qui est suffisante pour noyer complètement les déchets, cependant que le rapport en quantité entre les déchets et les fractions fines minérales est compris entre 60 à 80 et 40 à 15%, et de préférence entre 80 et 20%, et par le fait que les déchets mélangés aux fractions fines minérales et déchargés en vue du dépôt sont compactés en un corps dense analogue à une roche qui est alors abandonné à la solidification par diagénèse.

2. Utilisation de fractions fines minérales selon la revendication 1, caractérisée par le fait que les fractions fines minérales sont des résidus riches en minéraux argileux provenant du lavage des graviers, des produits résiduels provenant de déchets triés au préalable ou des résidus de dépoussiérage.

3. Utilisation de fractions fines minérales selon la revendication 1 ou 2, caractérisée par le fait que des fractions à grains plus grossiers (sable, fraction appartenant aux graviers) sont ajoutées en vue de la stabilité du dépôt.